# EUROPÄISCHE PATENTSCHRIFT

(11) **EP 4 265 451 B1**
(45) Veröffentlichungstag und Bekanntmachung des Hinweises auf die Patenterteilung: **30.10.2024**
(21) Anmeldenummer: 22168894.8
(22) Anmeldetag: 19.04.2022
(51) Int. Cl.: B60J 7/06

(54) **PLANENAUFBAU EINES NUTZFAHRZEUGS MIT SCHIEBEVERDECK**
TARPAULIN STRUCTURE OF A COMMERCIAL VEHICLE WITH A SLIDING COVER
STRUCTURE DE BÂCHE D'UN VÉHICULE UTILITAIRE À RECOUVREMENT COULISSANT

(43) Veröffentlichungstag der Anmeldung: 25.10.2023
(73) Patentinhaber: Schmitz Cargobull AG, 48341 Altenberge (DE)
(72) Erfinder: Deutschle, Stefan, 48459 Münster (DE); Bartke, Dieter, 48356 Nordwalde (DE); Merker, Heinrich, 48493 Wettringen (DE); Stegemann, Georg, 48369 Saerbeck (DE); Goezze-Leifheit, Angsar, 48155 Münster (DE)
(74) Vertreter: Cohausz & Florack

(56) Entgegenhaltungen:
- DE-A1- 10 056 049
- DE-A1- 3 334 889
- DE-U1- 202013 001 846
- DE-U1- 29 815 722
- US-A1- 2015 246 601

## Beschreibung

Die Erfindung betrifft einen Planenaufbau eines Nutzfahrzeugs, insbesondere Lastkraftwagen, Anhänger oder Sattelauflieger, mit zwei Dachlängsholmen und mit einem an den Dachlängsholmen abgestützten sowie gegenüber den Dachlängsholmen von einer das Dach verschließenden geschlossenen Stellung in eine das Dach zum Beladen des Planenaufbaus freigebende offene Stellung und zurück verstellbaren Schiebeverdeck, wobei das Schiebeverdeck wenigstens einen die Dachlängsholme miteinander verbindenden und gegenüber den Dachlängsholmen längsverschiebbar vorgesehenen Spriegel aufweist, wobei der Spriegel wenigstens zwei Laufwagen mit jeweils wenigstens einer in wenigstens eine Laufkulisse jedes Dachlängsholms eingreifenden Dachlaufrolle zum Verschieben des Spriegels gegenüber den Dachlängsholmen aufweist, wobei die Laufkulissen jeweils wenigstens eine Lauffläche zum Abrollen der wenigstens einen Dachlaufrolle und jeweils wenigstens eine angrenzend zu einer Stirnseite der Dachlaufrolle angeordnete Kulissenfläche aufweist.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Planenaufbauten, insbesondere Curtainsider, umfassen vielfach ein sogenanntes Schiebeverdeck, mit dem die Plane am Dach verschlossen und wieder aufgeschoben werden kann, um ein Be- oder Entladen des Planenaufbaus durch das Dach zu ermöglichen. Die Schiebeverdecke stützen sich an den Seitenwänden der Planenaufbauten zugeordneten, sich längs des Nutzfahrzeugs erstreckenden Dachlängsholmen ab, mit denen die Schiebeverdecke unverlierbar verbunden sind. Die Dachlängsholme sind typischerweise wenigstens im Wesentlichen spiegelbildlich zueinander ausgebildet. Um das Schiebeverdeck gegenüber dem Dachlängsholmen von einer geschlossenen Stellung, in der das Schiebeverdeck das Dach verschließt, in eine offene Stellung, in der das Schiebeverdeck das Dach wenigstens teilweise für das Be- und Entladen freigibt, und zurück zu verstellen, ist das Schiebeverdeck über quer zum Nutzfahrzeug verlaufende Spriegel verbunden. Die Spriegel werden beim Verstellen des Schiebeverdecks entlang der Dachlängsholme nach vorne und wieder nach hinten verschoben. Dazu weisen die Spriegel jedem Dachlängsholm zugeordnet einen Laufwagen mit Rollen auf. Dabei greift wenigstens eine Dachlaufrolle in eine an der Oberseite des zugehörigen Dachlängsholms vorgesehene Laufkulisse ein, die eine Lauffläche zum Abrollen der korrespondierenden Laufrolle beim Verstellen des Schiebeverdecks bereitstellt. Zudem weist der Laufwagen eine Seitenlaufrolle auf, die in eine der Außenseite des Dachlängsholms zugeordnete weitere Laufkulisse eingreift und sich dabei auf einer Lauffläche abstützt, entlang derer die Seitenlaufrolle beim Verschieben des Schiebeverdecks abrollen kann.

An den Seitenwänden der Planenaufbauten werden meist die dortigen Seitenplanen in vertikaler Richtung nach unten stramm gezogen und gegenüber dem Bodenrahmen des Planenaufbaus verspannt. Die Seitenplanen sind dabei mit ihrem oberen Rand an den Dachlängsholmen aufgehängt. Daher werden beim Verspannen der Seitenplanen teilweise nicht unerhebliche Zugkräfte in die Dachlängsholme eingeleitet, die zu einer Verwindung des entsprechenden Dachlängsholms führen können. In ungünstigen Situationen können die Dachlaufrollen in Kontakt mit einer Kulissenfläche des Dachlängsholms kommen, die angrenzend zur Stirnseite der Dachlaufrolle angeordnet ist. Eigentlich ist gewollt, dass zwischen der Stirnseite der Dachlaufrolle und der angrenzenden Kulissenfläche stets ein geringer Spalt verbleibt, um ein problemloses Verfahren der Spriegel entlang der zugehörigen Dachlängsholme bei geringem Kraftaufwand sicherzustellen. Es hat sich jedoch gezeigt, dass in einigen Fällen ein entsprechendes Verstellen der Spriegel entlang der Dachlängsholme nicht sichergestellt werden kann. Der Fahrer muss dann hohe Kräfte zum Verstellen des Schiebeverdecks aufwenden oder es kommt zu einem Blockieren des Schiebeverdecks in Bezug auf die Dachlängsholme.

Um dies zu vermeiden, müssen Spalten zwischen den Stirnseiten der Dachlaufrollen und den gegenüberliegenden Kulissenflächen mit hinreichenden Spaltbreiten bereitgestellt werden. Dies schränkt jedoch regelmäßig die maximale Ladehöhe im Bereich der Dachlängsholme ein.

Daher liegt der vorliegenden Erfindung die Aufgabe zugrunde, den Planenaufbau der eingangs genannten und zuvor näher beschriebenen Art derart auszugestalten und weiterzubilden, dass die vorbekannten Probleme vermindert werden können.

Diese Aufgabe ist bei einem Planenaufbau nach dem Oberbegriff von Anspruch 1 dadurch gelöst, dass die Kulissenflächen wenigstens abschnittsweise durch wenigstens ein aus einem Fremdmaterial gegenüber dem Grundmaterial der Dachlängsholme gebildeten Inlay gebildet wird.

Die Erfindung hat erkannt, dass sich die Verstellung des Schiebeverdecks durch wenigstens ein Inlay in einer Laufkulisse der Dachlängsholme verbessern lässt. Ein Kontakt der Dachlaufrollen, insbesondere der Stirnseiten der Dachlaufrollen, mit der Kulissenfläche kann so zwar nicht unterbunden werden, aber die Auswirkungen solcher Kontakte lassen sich auf diese Weise reduzieren. Dabei kann das Inlay in einer Art und Weise sowie aus einem Material gebildet werden, so dass der Kontakt zwischen einer Dachlaufrolle und dem Inlay anders als bei einem Kontakt der Dachlaufrolle mit dem Grundmaterial des Dachlängsholms nicht zu eine Verdrängung von Material führt. Wenn die Dachlaufrolle gegen das Grundmaterial des Dachlängsholms drückt, kann die Dachlaufrolle geringfügig in die Kulissenfläche eingedrückt werden, wobei etwas Grundmaterial nach außen verdrängt wird, wo es eine Wölbung in der Kulissenfläche aufwerfen kann. Hier kann es dann beim Verstellen des Schiebeverdecks zu einem unerwünschten Kontakt zwischen der Dachlaufrolle und der Kulissenfläche kommen, die ein Aufschieben oder Schließen des Schiebeverdecks behindern kann. Zudem kann dieser unerwünschte Kontakt zu einer weiteren Verdrängung von Grundmaterial des Dachlängsholms und zu Bildung von wulstartigen oder rippenartigen Auswölbungen in der Kulissenfläche führen. Durch das Einbringen des Inlays an der entsprechenden Stelle der Kulissenfläche können diese Effekte unterbunden oder wenigstens verringert werden.

Bei einer ersten besonders bevorzugten Ausgestaltung des Planenaufbaus ist das wenigstens eine Inlay aus einem gegenüber dem Grundmaterial der Dachlängsholme festeren und/oder abriebfesteren Material ausgebildet. Das Inlay kann insbesondere aus einem Material mit einen höheren Zugfestigkeit und/oder Biegefestigkeit als das Grundmaterial des Dachlängsholms gebildet sein. Durch eine gegenüber dem Grundmaterial des Dachlängsholms erhöhte Festigkeit des Inlays kann vermieden werden, dass sich die Dachlaufrolle in die Kulissenfläche bzw. das Inlay hineindrückt, oder es wird erreicht, dass sich die Dachlaufrolle weniger stark in die Kulissenfläche bzw. das Inlay hineindrücken kann. Wenn das Inlay aus einem gegenüber dem Grundmaterial des Dachlängsholms abriebfesteren Material ausgebildet ist, kann vermieden werden, dass sich beim Verstellen der Dachlaufrolle im Falle eines Kontakts mit der Kulissenfläche in nennenswertem Maße Material des Dachlängsholms verdrängt und als eine Art Wulst oder Rippe in der Kulissenfläche aufgeschoben wird. Alternativ oder zusätzlich bietet es sich an, wenn das Material des Inlays UV-beständig, witterungsbeständig, rostfrei und/oder drallfrei ist. Dies dient in hohen Maße der Langlebigkeit des Inlays. Eine gute Verklebbarkeit des Inlay kann dafür sorgen, dass das Inlay zuverlässig und dauerhaft am Dachlängsholm gehalten wird.

Ganz grundsätzlich hat sich die Erfindung insbesondere bei Dachlängsholmen aus Aluminium und/oder aus einem Strangpressprofil bewährt. Entsprechende Dachlängsholme sind mithin aus einem verhältnismäßig weichen Material gebildet, bei dem die einleitend beschriebenen Nachteile in besonderem Maße auftreten können. Hier lassen sich mithin entsprechende Inlays in der Kulissenfläche besonders gewinnbringend nutzen. Insbesondere im Falle eines stranggepressten Grundmaterials des Dachlängsholms ist es bevorzugt, zunächst eine Grundstruktur des Dachlängsholms aus dem Grundmaterial des Dachlängsholms herzustellen und anschließend in die entsprechende Laufkulisse wenigstens ein Inlay einzubringen.

Dabei bietet es sich alternativ oder zusätzlich aus funktionalen Gründen und aus Kostengründen an, wenn das wenigstens eine Inlay aus Stahl oder Kunststoff ausgebildet ist. Im Falle von Stahl kann gezielt ein solcher mit den gewünschten Materialeigenschaften ausgewählt werden. Bei Kunststoffen bieten sich aufgrund der Materialeigenschaften insbesondere ABS oder PTFE als Inlay an.

Besonders einfach und zweckmäßig lässt sich das Inlay in der Laufkulisse anbringen, wenn das Inlay auf seiner der Dachlaufrolle abgewandten Seite an das Grundmaterial des Dachlängsholms angrenzt. Mithin ist im Bereich des Inlays bereits ein Grundmaterial des Dachlängsholms vorgesehen, auf dem das Inlay angebracht werden muss. Mit anderen Worten, ohne das Inlay würde die Grundstruktur des Dachlängsholm die entsprechende Kulissenfläche bilden. Das Inlay muss also nicht als völlig separates Strukturelement in den Dachlängsholm eingebracht werden, auch wenn dies selbstverständlich möglich sein kann. Hierdurch können im Einzelfall besondere anderweitige Vorteile erreicht werden. Besonders bevorzugt ist es dabei, wenn das Inlay auf seiner der Dachlaufrolle abgewandten Seite mit dem Grundmaterial des Dachlängsholms verklebt oder verschweißt ist. Die Montage kann dann einfach, schnell, und zuverlässig nach der eigentlichen Herstellung des Dachlängsholms aus dem Grundmaterial am Dachlängsholm angebracht werden. Das Inlay kann mit dem Dachlängsholm aber auch genietet, geschraubt, geklipst und/oder geklemmt werden. Dies erlaubt eine sehr einfache und schnelle Montage.

Besonders einfach und zweckmäßig wird es in vielen Fällen sein, wenn das wenigstens eine Inlay über den überwiegenden Teil der Längserstreckung des zugehörigen Dachlängsholms vorgesehen ist. In diesem Teil der Längserstreckung des Dachlängsholms können dann die zuvor beschriebenen Vorteile erreicht werden. Vor diesem Hintergrund kann es mithin besonders bevorzugt sein, wenn das wenigstens eine Inlay wenigstens im Wesentlichen über die gesamte Längserstreckung des zugehörigen Dachlängsholms vorgesehen ist.

Wenn das wenigstens eine Inlay in voneinander beabstandeten Teilstücken entlang der Längserstreckung des Dachlängsholms vorgesehen ist, können so gezielt die besonders gefährdeten und beanspruchten Bereiche der Laufkulisse von der Anwesenheit des Inlays profitieren, ohne dass das Inlay über die gesamte Längserstreckung des Dachlängsholms angebracht werden muss. Dabei kann es besonders einfach und zweckmäßig sein, wenn die Teilstücke des Inlays in regelmäßigen Abständen über die Längserstreckung des zugehörigen Dachlängsholms verteilt angeordnet sind. In vielen Fällen werden auch die besonders gefährdeten und beanspruchten Bereiche in regelmäßigen Abständen über die Längserstreckung des Dachlängsholms verteilt angeordnet sein.

Die erfindungsgemäßen Vorteile lassen sich in besonderem Maße erreichen und nutzbar machen, wenn die wenigstens eine Dachlaufrolle mit der Stirnseite einem freien Ende einer Achse des Laufwagens zugeordnet ist. Dann ist die Kulissenfläche in besonderem Maße gefährdet durch einen Kontakt mit der Dachlaufrolle verformt zu werden.

Um einen platzsparenden und trotzdem zuverlässigen Dachlängsholm bereitzustellen, kann es sich anbieten, wenn die wenigstens eine Laufkulisse wenigstens eine Lauffläche zum Abrollen der Dachlaufrolle aufweist. Die Dachlaufrolle kann dann in geeigneter Weise entlang der Lauffläche der Laufkulisse abrollen und den zugehörigen Spriegel beim Verstellen des Schiebeverdecks führen. Dies gilt in besonderem Maße, wenn die wenigstens eine Lauffläche im Wesentlichen senkrecht zur Kulissenfläche ausgerichtet ist. In solchen Fällen ist eine Beeinträchtigung der Kulissenfläche durch einen unbeabsichtigten Kontakt mit der Stirnseite der Dachlaufrolle ohne Inlay in besonderem Maße zu erwarten.

Alternativ oder zusätzlich kann die wenigstens eine Kulissenfläche wenigstens im Wesentlichen horizontal ausgerichtet sein, um einen Kontakt mit der Stirnseite der Dachlaufrolle möglichst zu vermeiden. Alternativ oder zusätzlich kann die wenigstens eine Lauffläche wenigstens im Wesentlichen vertikal ausgerichtet sein, um den Laufwagen und den zugehörigen Spriegel zweckmäßig entlang des Dachlängsholms zu führen. Unter einer horizontalen und einer vertikalen Ausrichtung versteht man eine solche, die sich für ein auf ebenen und horizontalen Untergrund abgestellten Planenaufbau als Referenz ergeben.

Die Führung des Laufwagens entlang des Dachlängsholms kann dann besonders zweckmäßig erfolgen, wenn die wenigstens eine Dachlaufrolle in einer Richtung quer zum zugehörigen Dachlängsholm formschlüssig in der Laufkulisse gehalten ist. Dies gilt in besonderem Maße, wenn dieser Formschluss in einer horizontalen Richtung ausgebildet ist. Dann kann ein seitliches Verschieben des Spriegels und damit des Schiebeverdecks vermieden werden. Die wenigstens eine Lauffläche dient dann vorzugsweise zum Abstützen der Dachlaufrolle quer, insbesondere horizontal, zum zugehörigen Dachlängsholm, und zwar bedarfsweise in gegenüberliegende Richtungen.

Um ein zuverlässiges Abstützen des Spriegels gegenüber dem Dachlängsholm trotz eines einfachen Verstellens des Spriegels entlang des Dachlängsholms zu erreichen, kann der Spriegel, insbesondere der zugehörige Laufwagen, zum Verschieben des Spriegels gegenüber den Dachlängsholmen eine in jeweils wenigstens eine weitere Laufkulisse an der Außenseite des jeweiligen Dachlängsholm eingreifende Seitenlaufrolle aufweisen. Dabei kann die weitere Laufkulissen jeweils wenigstens eine Lauffläche zum Abrollen der wenigstens einen Seitenlaufrolle aufweisen. Der Laufwagen kann so einfach verstellt und die Gewichtskräfte des Schiebeverdecks können einfach und zuverlässig abgeleitet werden. Alternativ oder zusätzlich kann sich der Spriegel mithin über die Seitenlaufrollen an den zugehörigen Laufflächen gegenüber den Dachlängsholmen abstützen, um entsprechende Kräfte vom Schiebeverdeck an die Dachlängsholme ableiten zu können. Das Schiebeverdeck kann sich aber bedarfsweise auch anderweitig über den wenigstens einen Spriegel an den Dachlängsholmen abstützen.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Planenaufbau in einer perspektivischen Ansicht,
- Fig. 2: ein Detail des Schiebeverdecks des Planenaufbaus der Fig. 1 in einer perspektivischen Ansicht,
- Fig. 3: die Verbindung eines Spriegels des Schiebeverdecks aus Fig. 2 mit einem Dachlängsholm des Planenaufbaus in einer perspektivischen Ansicht und
- Fig. 4: die Verbindung aus Fig. 3 in einer Schnittansicht entlang einer Schnittebene quer zum Dachlängsholm.

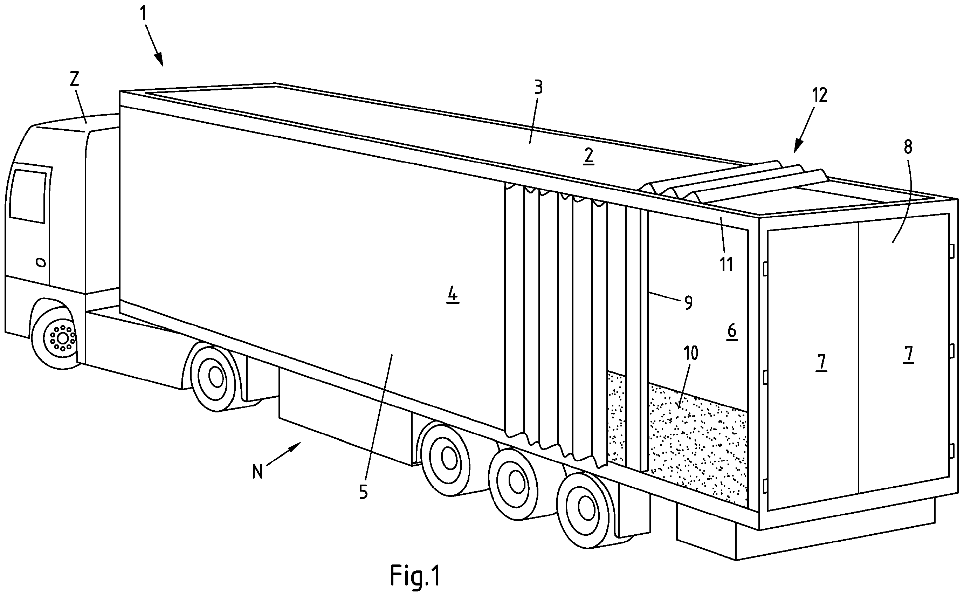

In der Fig. 1 ist ein von einer Zugmaschine Z gezogenes Nutzfahrzeug N in Form eines Sattelaufliegers dargestellt. Das Nutzfahrzeug N weist einen Planenaufbau 1 in Form eines Curtainsiders auf. Der Planenaufbau 1 weist eine Plane 2 am Dach 3 und jeweils eine Seitenplane 4 an den beiden Seitenwänden 5 des Planenaufbaus 1 auf. Die beiden Seitenplanen 4 an den Seitenwänden 5 können nach vorne oder nach hinten verschoben werden, um den Zugang zu dem vom Planenaufbau 1 umschlossenen Laderaum 6 freizugeben. Ein weiterer Zugang zum Laderaum 6 kann durch die Flügeltüren 7 der Rückwand 8 erfolgen. Die Seitenplane 4 an der vorderen Seitenwand 5 des Planenaufbaus 1 ist teilweise aufgeschoben, so dass eine Runge 9 erkennbar ist, die einerseits mit dem Ladeboden 10 des Planenaufbaus 1 und andererseits mit einem sich in Längsrichtung des Planenaufbaus 1 erstreckenden Dachlängsholm 11 verbunden ist. Die Runge 9 kann zum Be- und Entladen vom Ladeboden 10 des Planenaufbaus 1 getrennt und entlang dem Dachlängsholm 11 nach vorne oder nach hinten verschoben werden. Neben der in der Fig. 1 dargestellten Runge sind noch weitere gleichartige, durch die vordere Seitenplane 4 verdeckte Rungen 9 vorgesehen. Die Plane 2 am Dach 3 des Planenaufbaus 1 kann ebenfalls zum Be- und Entladen nach vorne geschoben werden. Die Plane 2 am Dach 3 ist daher Teil eines Schiebeverdecks 12, das seitlich ebenfalls an den Dachlängsholmen 11 gehalten ist.

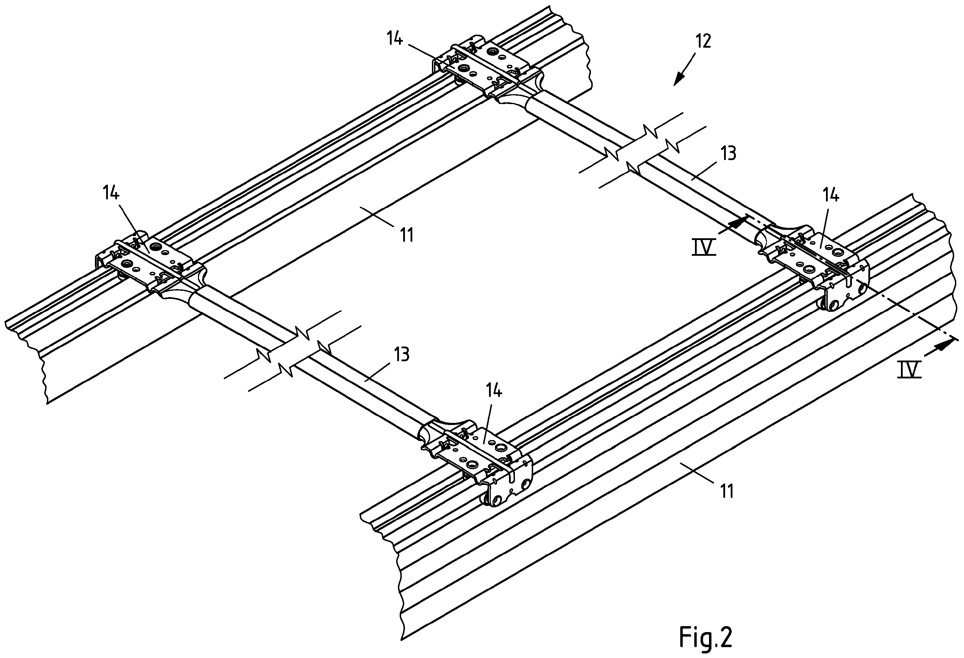

In der Fig. 2 ist ein Detail des Schiebeverdecks 12 ohne die Plane 2 des Schiebeverdecks 12 dargestellt. Das Schiebeverdeck 12 umfasst Spriegel 13, die sich zwischen den beiden seitlich im Dach 2 des Planenaufbaus 1 vorgesehenen Dachlängsholmen 11 erstrecken, und die Dachlängsholme 11 miteinander verbinden. Die Spriegel 13 tragen die Plane 3 des Dachs 2 und stützen das Dach 2 an den Dachlängsholmen 11 ab. Zwei dieser bei geschlossenem Schiebeverdeck 12 entlang der Längserstreckung des Planenaufbaus 1 verteilt angeordneten Spriegel 13 sind in der Fig. 2 dargestellt, wobei der besseren Anschaulichkeit halber die mittleren Abschnitte der Spriegel 13 über dem Laderaum 6 des Planenaufbaus 1 weggelassen worden sind. Die Spriegel 13 weisen an ihren Längsenden zugeordnet zu den beiden Dachlängsholmen 11 jeweils einen Laufwagen 14 auf, mit denen die Spriegel 13 entlang der Dachlängsholme 11 nach vorne und nach hinten verschoben werden können. Auf diese Weise kann das Schiebeverdeck 12 zum Be- und Entladen in eine offene Stellung nach vorne und zum Verschließen des Dachs 2 in eine geschlossene Stellung nach hinten verstellt werden.

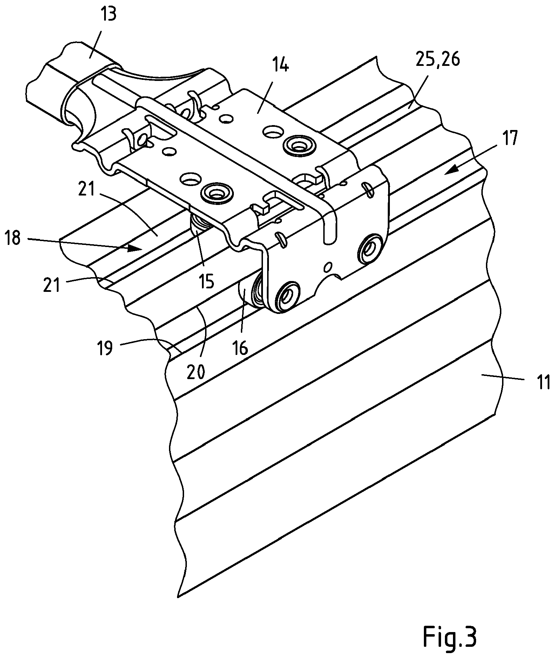

In der Fig. 3 ist eine Verbindung eines Laufwagens 14 mit einem Dachlängsholm 11 exemplarisch dargestellt. Die einander gegenüberliegenden Dachlängsholme 11 und die gegenüberliegenden Laufwagen 14 sind jeweils wenigstens im Wesentlichen spiegelsymmetrisch ausgebildet. Die Verbindungen der Spriegel 13 mit den Dachlängsholmen 11 sind bei dem dargestellten und insoweit bevorzugten Planenaufbau 1 also gleichartig ausgestaltet. Jeder Laufwagen 14 weist an einem oberhalb des zugehörigen Dachlängsholms 11 angeordneten Abschnitt zwei Dachlaufrollen 15 und an einem seitlich neben dem Dachlängsholm 11 angeordneten Abschnitt zwei Seitenlaufrollen 16 auf. Es könnten aber auch mehr oder weniger Dachlaufrollen 15 und/oder Seitenlaufrollen 16 vorgesehen sein.

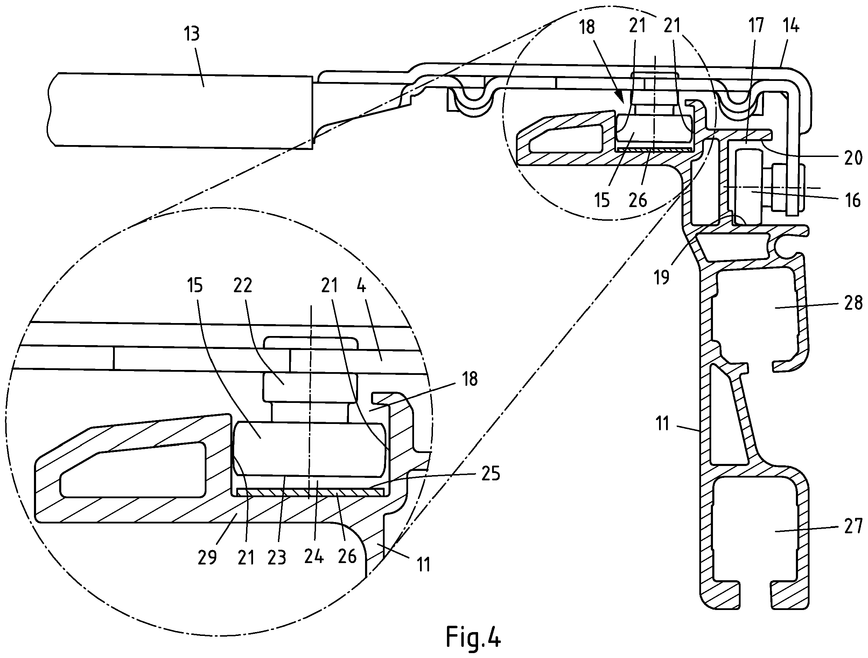

In der Fig. 4 ist ein in einen Dachlängsholm 11 eingreifender Laufwagen 14 in einer Schnittansicht quer zum Dachlängsholm 11 dargestellt. Die Seitenlaufrollen 16 und die Dachlaufrollen 15 greifen jeweils in eine korrespondierende Laufkulisse 17,18 des zugehörigen Dachlängsholms 11 ein. Die Seitenlaufrollen 16 stehen dabei auf einer sich in Längsrichtung des Dachhlängsholms 11 erstreckenden Lauffläche 19 auf, auf der die Seitenlaufrollen 16 abrollen und in Längsrichtung des Dachlängsholms 11 verfahren werden können. Dazu sind die Seitenlaufrollen 16 um eine wenigstens im Wesentlichen horizontal verlaufende Drehachse D1 drehbar. Ferner stützen die Seitenlaufrollen 16 den Spriegel 13 am Dachlängsholm 11 in wenigstens im Wesentlichen vertikaler Richtung ab, um Gewichtskräfte in den Dachlängsholm 11 abzuleiten. Um zu vermeiden, dass der Laufwagen 14 unbeabsichtigt vom Dachlängsholm 11 abgehoben wird, weist die den Seitenlaufrollen 16 zugeordnete Laufkulisse 17 auf der der Lauffläche 19 gegenüberliegenden Seite der Seitenlaufrollen 16 eine Anlagefläche 20 auf, mit der die Seitenlaufrollen 16 in Anlage gelangen, wenn der Laufwagen 14 nach oben bewegt wird.

Die Dachlaufrollen 15 sind um eine wenigstens im Wesentlichen vertikale Drehachse D2 drehbar und greifen von oben in die zugehörige Laufkulisse 18 im Dachlängsholm 11 ein. Die Laufkulisse 18 stellt auf beiden Seiten der Dachlaufrolle 15 eine Lauffläche 21 bereit. Entlang einer von diesen Laufflächen 21 kann jede Dachlaufrolle 15 nach vorne und nach hinten abrollen, um das Schiebeverdeck 12 in die offene Stellung und wieder in die geschlossene Stellung verstellen zu können. Durch die Laufflächen 18 wird zudem ein Verschieben des Spriegels 13 in einer Richtung quer zum Dachlängsholm 11 begrenzt, so dass das Schiebeverdeck 12 stets definiert an den Dachlängsholmen 11 gehalten und entlang der Dachlängsholme 11 verstellt werden kann. Die Dachlaufrollen 15 sind an freien Enden von Achsen 22 vorgesehen, die von oben in die entsprechende Laufkulisse 18 eingreifen. Die dem freien Ende der Achse 22 zugeordneten Stirnseite 23 der Dachlaufrolle 15 ist normalerweise über einen Spalt 24 von einer angrenzenden Kulissenfläche 25 der zugehörigen Laufkulisse 18 beabstandet, um einen Kontakt zwischen der Stirnseite 23 der Dachlaufrolle 15 und der Kulissenfläche 25 zu vermeiden.

An dem unteren Ende des seitlichen Schenkels des Dachlängsholms 11 ist noch eine Laufkulisse 27 zur Aufnahme von Laufwagen der Rungen 9 und zum Verschieben der Rungen 9 in Längsrichtung des Dachlängsholms 11 vorgesehen. Darüber befindet sich noch eine Laufkulisse 28 zur Aufnahme von Laufwagen der Seitenplane 4, über welche die Seitenplane 4 in Längsrichtung des Dachlängsholms 11 auf und zu gezogen werden kann. Wenn die Seitenplane 4 zugezogen und nach unten abgespannt ist, werden entsprechende Zugkräfte seitlich in den Dachlängsholm 11 eingeleitet, die zu einer gewissen Torsion oder Deformation des Dachlängsholms 11 führen können. Infolgedessen kann es dazu kommen, dass die Stirnseite 23 der Dachlaufrollen 15 auf die gegenüberliegende Kulissenfläche 25 gedrückt wird und dort Material des Dachlängsholms 11 seitlich verdrängt, was die Gefahr eines Kontakts zwischen den Stirnseiten 23 der Dachlaufrollen 15 und der gegenüberliegenden Kulissenfläche 25 noch vergrößern kann.

Anstelle den Spalt 24 zu vergrößern, was zulasten der Ladehöhe im Laderaum 6 des Planenaufbaus 1 gehen würde, ist in der Laufkulisse 18 ein Inlay 26 vorgesehen. Dieses Inlay 26 bildet wenigstens abschnittsweise in Längsrichtung des Dachlängsholms 11 die Kulissenfläche 25 gegenüber der Stirnseite 23 der Dachlaufrollen 15. Das Inlay 26 ist zudem aus einem Material gebildet, dass fester und abriebfester ist als das Grundmaterial des übrigen Dachlängsholms 11, das bei dem dargestellten Planenaufbau 1 aus einem einzigen Material gebildet wird. Bei der Festigkeit kann es sich insbesondere um eine höhere Zugfestigkeit und/oder Biegefestigkeit handeln. Bei der Abriebfestigkeit kann eine geeignete Methode zur Bestimmung der Abriebfestigkeit herangezogen werden, der das Material des Inlays 26 und das Grundmaterial des Dachlängsholms 11 analog unterzogen wird. Bei dem Material handelt es sich um Aluminium, aus dem die Grundstruktur des Dachlängsholms 11 als Strangpressprofil gefertigt ist. Anschließend ist das Inlay 26 in die entsprechende Laufkulisse 18 der Grundstruktur 29 des Dachlängsholms 11 eingeklebt worden. Denkbar wäre es auch, das Inlay 26 einzuschweißen oder anderweitig festzulegen. Das Inlay 26 sorgt, dafür, dass im Falle eines Kontakts zwischen der Stirnseite 23 und der gegenüberliegenden Kulissenfläche 25 kein oder weniger Material des Dachlängsholms 11 seitlich verdrängt wird. Das Inlay 26 sorgt, ferner dafür, dass im Falle eines Kontakts zwischen der Stirnseite 23 und der gegenüberliegenden Kulissenfläche 25 beim Verschieben des Laufwagens 14 entlang des Dachlängsholms 11 weniger Material abgerieben, abgeschert oder seitlich verschoben wird.

Bei dem Inlay 26 handelt es sich um ein Stahlband, das sich über im Wesentlichen die gesamte Länge des Dachlängsholms 11 erstreckt. Das Inlay 26 könnte aber auch ein oder mehrfach unterbrochen und mithin nur abschnittsweise entlang der Laufkulisse 18 vorgesehen sein. Dabei kommen insbesondere die Abschnitte in Betracht, die besonders beansprucht und/oder hinsichtlich einer Verdrängung von Material besonders gefährdet sind. Nicht dargestellt aber dennoch denkbar wäre es auch, wenn die den Stirnseiten 23 der Dachlaufrollen 15 gegenüberliegende Kulissenfläche 25 nicht über wenigstens im Wesentlichen ihre gesamte Breite, sondern nur über einen Teil der Breite aus einem Inlay 26 gebildet wird.

### Bezugszeichenliste

- 1: Planenaufbau
- 2: Plane
- 3: Dach
- 4: Seitenplane
- 5: Seitenwand
- 6: Laderaum
- 7: Flügeltüren
- 8: Rückwand
- 9: Runge
- 10: Ladeboden
- 11: Dachlängsholm
- 12: Schiebeverdeck
- 13: Spriegel
- 14: Laufwagen
- 15: Dachlaufrolle
- 16: Seitenlaufrolle
- 17,18: Laufkulisse
- 19: Lauffläche
- 20: Anlagefläche
- 21: Lauffläche
- 22: Achse
- 23: Stirnseite
- 24: Spalt
- 25: Kulissenfläche
- 26: Inlay
- 27,28: Laufkulisse
- 29: Grundstruktur
- D1: Drehachse
- D2: Drehachse
- N: Nutzfahrzeug
- Z: Zugmaschine

## Patentansprüche

1. Planenaufbau (1) eines Nutzfahrzeugs (N), insbesondere Lastkraftwagen, Anhänger oder Sattelauflieger, mit zwei Dachlängsholmen (11) und mit einem an den Dachlängsholmen (11) abgestützten sowie gegenüber den Dachlängsholmen (11) von einer das Dach (2) verschließenden geschlossenen Stellung in eine das Dach (2) zum Beladen des Planenaufbaus (1) freigebende offene Stellung und zurück verstellbaren Schiebeverdeck (12), wobei das Schiebeverdeck (12) wenigstens einen die Dachlängsholme (11) miteinander verbindenden und gegenüber den Dachlängsholmen (11) längsverschiebbar vorgesehenen Spriegel (13) aufweist, wobei der Spriegel (13) wenigstens zwei Laufwagen (14) mit jeweils wenigstens einer in wenigstens eine Laufkulisse (18) jedes Dachlängsholms (11) eingreifenden Dachlaufrolle (15) zum Verschieben des Spriegels (13) gegenüber den Dachlängsholmen (11) aufweist, wobei die Laufkulissen (18) jeweils wenigstens eine Lauffläche (21) zum Abrollen der wenigstens einen Dachlaufrolle (15) und jeweils wenigstens eine angrenzend zu einer Stirnseite (23) der Dachlaufrolle (15) angeordnete Kulissenfläche (25) aufweist,
**dadurch gekennzeichnet, dass** die Kulissenflächen (25) wenigstens abschnittsweise durch wenigstens ein aus einem Fremdmaterial gegenüber dem Grundmaterial der Dachlängsholme (11) gebildeten Inlay (26) gebildet wird.

2. Planenaufbau nach Anspruch 1,
**dadurch gekennzeichnet, dass** das wenigstens eine Inlay (26) aus einem gegenüber dem Grundmaterial der Dachlängsholme (11) festeren und/oder abriebfesteren Material ausgebildet ist.

3. Planenaufbau nach Anspruch 1 oder 2,
**dadurch gekennzeichnet, dass** die Dachlängsholme (11) aus Aluminium und/oder als Strangpressprofil ausgebildet sind und/oder dass das wenigstens eine Inlay (26) aus Stahl oder Kunststoff, insbesondere ABS oder PTFE, ausgebildet ist.

4. Planenaufbau nach einem der Ansprüche 1 bis 3,
**dadurch gekennzeichnet, dass** das Inlay (26) auf seiner der Dachlaufrolle (15) abgewandten Seite an das Grundmaterial des Dachlängsholms (11) angrenzt und dass, vorzugsweise, das Inlay (26) auf seiner der Dachlaufrolle (15) abgewandten Seite mit dem Grundmaterial des Dachlängsholms (11) verklebt, genietet, verschraubt, verrastet und/oder geklemmt und/oder verschweißt ist.

5. Planenaufbau nach einem der Ansprüche 1 bis 4,
**dadurch gekennzeichnet, dass** das wenigstens eine Inlay (26) über den überwiegenden Teil der Längserstreckung des zugehörigen Dachlängsholms (11) vorgesehen ist und dass, vorzugsweise, das wenigstens eine Inlay (26) wenigstens im Wesentlichen über die gesamte Längserstreckung des zugehörigen Dachlängsholms (11) vorgesehen ist.

6. Planenaufbau nach einem der Ansprüche 1 bis 5,
**dadurch gekennzeichnet, dass** das wenigstens eine Inlay (26) in voneinander beabstandeten Teilstücken, insbesondere regelmäßig, über die Längserstreckung des zugehörigen Dachlängsholms (11) verteilt angeordnet ist.

7. Planenaufbau nach einem der Ansprüche 1 bis 6,
**dadurch gekennzeichnet, dass** die wenigstens eine Dachlaufrolle (15) mit der Stirnseite (23) einem freien Ende einer Achse (22) des Laufwagens (14) zugeordnet ist.

8. Planenaufbau nach einem der Ansprüche 1 bis 7,
**dadurch gekennzeichnet, dass** die wenigstens eine Laufkulisse (18) wenigstens eine Lauffläche (21) zum Abrollen der Dachlaufrolle (15) aufweist und dass, vorzugsweise, wenigstens eine Lauffläche (21) im Wesentlichen senkrecht zur Kulissenfläche (25) ausgerichtet ist.

9. Planenaufbau nach einem der Ansprüche 1 bis 8,
**dadurch gekennzeichnet, dass** die wenigstens eine Kulissenfläche (25) wenigstens im Wesentlichen horizontal ausgerichtet ist und/oder dass die wenigstens eine korrespondierende Lauffläche (21) wenigstens im Wesentlichen vertikal zu dem horizontal ausgerichteten Planenaufbau (1) ausgerichtet ist.

10. Planenaufbau nach einem der Ansprüche 1 bis 9,
**dadurch gekennzeichnet, dass** die wenigstens eine Dachlaufrolle (15) in einer Richtung quer, insbesondere horizontal, zum zugehörigen Dachlängsholm (11) formschlüssig in der Laufkulisse (18) gehalten ist und dass, vorzugsweise, die wenigstens eine Lauffläche (21) zum Abstützen der Dachlaufrolle (15) quer, insbesondere horizontal, zum zugehörigen Dachlängsholm (11) ausgebildet ist.

11. Planenaufbau nach einem der Ansprüche 1 bis 10,
**dadurch gekennzeichnet, dass** der Spriegel (13), insbesondere die Laufwagen (14), zum Verschieben des Spriegels (13) gegenüber den Dachlängsholmen (11) in jeweils wenigstens eine weitere Laufkulisse (17) an der Außenseite des jeweiligen Dachlängsholm (11) eingreifenden Seitenlaufrolle (16) aufweist und dass die weiteren Laufkulissen (17) jeweils wenigstens eine Lauffläche (19) zum Abrollen der wenigstens einen Seitenlaufrolle (16) aufweist.

12. Planenaufbau nach einem der Ansprüche 1 bis 11,
**dadurch gekennzeichnet, dass** der Spriegel (13) sich über die Seitenlaufrollen (16) an den zugehörigen Laufflächen (19) gegenüber den Dachlängsholmen (11) abstützt und/oder dass sich das Schiebeverdeck (12) über den wenigstens einen Spriegel (13) an den Dachlängsholmen (11) abstützt.

## Claims

1. Tarpaulin body (1) of a utility vehicle (N), in particular a truck, trailer or semitrailer, with two longitudinal roof spars (11) and with a sliding roof (12) which is supported on the longitudinal roof spars (11) and is adjustable relative to the longitudinal roof spars (11) from a closed position closing the roof (2) into an open position releasing the roof (2) for loading the tarpaulin body (1) and back, wherein the sliding roof (12) has at least one bow (13) connecting the longitudinal roof spars (11) to one another and longitudinally displaceable relative to the longitudinal roof spars (11), wherein the bow (13) has at least two carriages (14), respectively with at least one roof roller (15) engaging in at least one guide link (18) of each longitudinal roof spar (11) for displacing the bow (13) relative to the longitudinal roof spars (11), wherein the guide link (18) has respectively at least one running surface (21) for rolling the at least one roof roller (15) and respectively at least one baffle surface (25) arranged adjacent to an end face (23) of the roof roller (15), **characterized in that** the baffle surfaces (25) are formed at least in sections by at least one inlay (26) formed from a different material relative to the base material of the longitudinal roof spars (11).

2. Tarpaulin structure according to claim 1, **characterized in that** the at least one inlay (26) is formed from a material which is stronger and/or more abrasion-resistant than the base material of the longitudinal roof spars (11).

3. Tarpaulin structure according to claim 1 or 2, **characterized in that** the longitudinal roof spars (11) are made of aluminum and/or are formed as an extruded profile and/or **in that** the at least one inlay (26) is made of steel or plastic, in particular ABS or PTFE.

4. Tarpaulin structure according to one of claims 1 to 3, **characterized in that** the inlay (26) is adjacent to the base material of the longitudinal roof spar (11) on its side facing away from the roof roller (15) and **in that**, preferably, the inlay (26) is glued, riveted, screwed, latched and/or clamped and/or welded to the base material of the longitudinal roof spar (11) on its side facing away from the roof roller (15).

5. Tarpaulin structure according to one of claims 1 to 4, **characterized in that** the at least one inlay (26) is provided over the major part of the longitudinal extent of the associated longitudinal roof spar (11) and **in that**, preferably, the at least one inlay (26) is provided over at least substantially the entire longitudinal extent of the associated longitudinal roof spar (11).

6. Tarpaulin structure according to one of claims 1 to 5, **characterized in that** the at least one inlay (26) is arranged in spaced-apart sections, in particular regularly, distributed over the longitudinal extent of the associated longitudinal roof spar (11).

7. Tarpaulin structure according to one of claims 1 to 6, **characterized in that** the at least one roof roller (15) is assigned with the end face (23) to a free end of an axle (22) of the carriage (14).

8. Tarpaulin structure according to one of the claims 1 to 7,
**characterized in that** the at least one guide link (18) has at least one running surface (21) for rolling the roof roller (15) and **in that**, preferably, at least one running surface (21) is aligned substantially perpendicular to the baffle surface (25).

9. Tarpaulin structure according to one of claims 1 to 8, **characterized in that** the at least one baffle surface (25) is aligned at least substantially horizontally and/or **in that** the at least one corresponding running surface (21) is aligned at least substantially vertically to the horizontally aligned tarpaulin structure (1).

10. Tarpaulin structure according to one of claims 1 to 9, **characterized in that** the at least one roof roller (15) is positively held in the running link (18) in a direction transverse, in particular horizontal, to the associated longitudinal roof spar (11) and **in that**, preferably, the at least one running surface (21) is formed to support the roof roller (15) transversely, in particular horizontally, to the associated longitudinal roof spar (11).

11. Tarpaulin structure according to one of claims 1 to 10, **characterized in that** the bow (13), in particular the carriages (14), for displacing the bow (13) with respect to the longitudinal roof spars (11), has lateral rollers (16)respectively engaging in at least one further guide link (17) on the outside of the respective longitudinal roof spar (11), and **in that** the further guide links (17) respectively have at least one running surface (19) for rolling the at least one lateral roller (16).

12. Tarpaulin structure according to one of claims 1 to 11, **characterized in that** the bow (13) is supported via the side rollers (16) on the associated running surfaces (19) opposite the longitudinal roof rails (11) and/or **in that** the sliding roof (12) is supported via the at least one bow (13) on the longitudinal roof rails (11).

## Revendications

1. Structure de bâche (1) d'un véhicule utilitaire (N), en particulier d'un camion, d'une remorque ou d'une semi-remorque, avec deux longerons de toit (11) et avec un toit coulissant (12) appuyé sur les longerons de toit (11) et réglable par rapport aux longerons de toit (11) d'une position fermée fermant le toit (2) à une position ouverte libérant le toit (2) pour un chargement de la structure de bâche (1) et inversement, où la bâche coulissante (12) a au moins un arceau (13) reliant les longerons de toit (11) entre eux et prévu de manière coulissable longitudinalement par rapport aux longerons de toit (11), où l'arceau (13) a au moins deux chariots (14) avec respectivement au moins un galet de roulement de toit (15) s'engageant dans au moins une coulisse de roulement (18) de chaque longeron de toit (11) pour le déplacement de l'arceau (13) par rapport aux longerons de toit (11), où les coulisses de roulement (18) ont respectivement au moins une surface de roulement (21) pour faire rouler le au moins un galet de roulement de toit (15) et respectivement au moins une surface de coulisse (25) disposée de manière adjacente à une face frontale (23) du galet de roulement de toit (15), **caractérisé en ce que** les surfaces de coulisse (25) sont formées au moins par sections par au moins un inlay (26) formé d'un matériau différent par rapport au matériau de base des longerons de toit (11).

2. Structure de bâche selon la revendication 1, **caractérisée en ce que** l'au moins un inlay (26) est réalisé dans un matériau plus solide et/ou plus résistant à l'abrasion que le matériau de base des longerons de toit (11).

3. Structure de bâche selon la revendication 1 ou 2, **caractérisée en ce que** les longerons de toit (11) sont réalisés en aluminium et/ou sous forme de profilé extrudé et/ou que l'au moins un inlay (26) est réalisé en acier ou en matière plastique, en particulier en ABS ou en PTFE.

4. Structure de bâche selon l'une des revendications 1 à 3, **caractérisée en ce que** l'inlay (26) est adjacent au matériau de base du longeron de toit (11) sur son côté opposé au galet de roulement de toit (15) et que, de préférence, l'inlay (26) est collé, rivé, vissé, enclenché et/ou serré et/ou soudé au matériau de base du longeron de toit (11) sur son côté opposé au galet de roulement de toit (15).

5. Structure de bâche selon l'une des revendications 1 à 4, **caractérisée en ce que** le au moins un insert (26) est prévu sur la majeure partie de l'étendue longitudinale du longeron de toit (11) associé et que, de préférence, le au moins un insert (26) est prévu au moins essentiellement sur toute l'étendue longitudinale du longeron de toit (11) associé.

6. Structure de bâche selon l'une des revendications 1 à 5, **caractérisée en ce que** l'au moins un inlay (26) est disposé en tronçons espacés les uns des autres répartis, en particulier régulièrement, sur l'étendue longitudinale du longeron de toit (11) correspondant.

7. Structure de bâche selon l'une des revendications 1 à 6, **caractérisée en ce que** l'au moins un galet de toit (15) est associé par sa face frontale (23) à une extrémité libre d'un axe (22) du chariot (14).

8. Structure de bâche selon l'une des revendications 1 à 7, **caractérisée en ce que** la au moins une coulisse (18) a au moins une surface de roulement (21) pour faire rouler le galet de toit (15) et **en ce que**, de préférence, au moins une surface de roulement (21) est orientée essentiellement perpendiculairement à la surface de coulisse (25).

9. Structure de bâche selon l'une des revendications 1 à 8, **caractérisée en ce que** la au moins une surface de coulisse (25) est orientée au moins essentiellement horizontalement et/ou que ladite au moins une surface de roulement correspondante (21) est orientée au moins essentiellement verticalement par rapport à la structure de bâche (1) orientée horizontalement.

10. Structure de bâche selon l'une des revendications 1 à 9, **caractérisée en ce que** l'au moins un galet de roulement de toit (15) est maintenu par complémentarité de forme dans la coulisse de roulement (18) dans une direction transversale, en particulier horizontale, par rapport au longeron de toit (11) correspondant et que, de préférence, l'au moins une surface de roulement (21) est formé pour soutenir le galet de roulement de toit (15) transversalement, en particulier horizontalement, par rapport au longeron de toit (11) correspondant.

11. Structure de bâche selon l'une des revendications 1 à 10, **caractérisée en ce que** l'arceau (13), en particulier les chariots (14), a, pour le déplacement de l'arceau (13) par rapport aux longerons de toit (11), a des galets de roulement latéraux (16) s'engageant respectivement dans au moins une autre coulisse de roulement (17) sur le côté extérieur du longeron de toit (11) respectif, et que les autres coulisses de roulement (17) ont chacune au moins une surface de roulement (19) pour faire rouler le au moins un galet de roulement latéral (16).

12. Structure de bâche selon l'une des revendications 1 à 11, **caractérisée en ce que** l'arceau (13) s'appuie sur les surfaces de roulement (19) correspondantes par des galets de roulement latéraux (16) par rapport aux longerons de toit (11) et/ou que le toit coulissant (12) s'appuie sur les longerons de toit (11) par au moins un arceau (13).
